# EUROPEAN PATENT APPLICATION

(11) **EP 4 257 463 A1**
(43) Date of publication of application: **11.10.2023**
(21) Application number: 22167144.9
(22) Date of filing: 07.04.2022
(51) Int. Cl.: B62H 3/00

(54) **SYSTEM FOR LOCKING A SMALL VEHICLE SUCH AS A BICYCLE OR SCOOTER**

(71) Applicant: eDock, 1421 Ophain-Bois-Seigneur-Isaac (BE)
(72) Inventor: PEETERS, Sébastien Gommaire Pascal Christian, 1421 Ophain-Bois-Seigneur-Isaac (BE); PEETERS, Christophe Daniel Bernard Eugène, 1421 Ophain-Bois-Seigneur-Isaac (BE); PEPI, Maxime Paul Michael, 7800 Lanquesaint (BE); REY PAULINO, Tony, 6850 Paliseul (BE)
(74) Representative: Calysta NV

(57) **Abstract**

A system for locking a small vehicle such as a bicycle or a scooter, comprising a vertical guiding system configured to be supported by a ground surface; a translational element configured for translational vertical movement over the vertical guiding system; a holder connected to the translational element, wherein the holder comprises a locking element configured to be arranged in a locking position for restricting movement of a bar of the small vehicle, and an unlocking position for arranging the bar in or out of the holder; characterized in that the holder is configured to be rotated relative to the translational element around a rotation axis between at least a first position and a second position.

## Description

The present invention relates to the field of locking vehicles.

Small vehicles such as bicycles have been used for a long time for transportation. After arriving at the destination, the owner often has to leave the small vehicle in a public domain. This introduces a risk of theft. Locking systems are known in various types and forms, but are still often not safe or robust enough. In recent years electrical bicycles have become popular, which allows people to travel longer distances by bicycles instead of e.g. an automobile. However, these electrical bicycles are quite expensive, and a fear of theft results in people not using their electrical bicycles as much as they would like to.

In the recent years, also other small vehicles such as scooters have become popular in urban mobility. This is partially due the electrification of these vehicles, which makes them easy to travel with. They are also smaller than bicycles, which makes them more convenient to take them along in e.g. a train or car, and then travel the last shorter distance with the scooter.

As the types of vehicles being used in urban environments is becoming more diverse, users are faced with the problem that many of the available infrastructure for locking is not suited for their type of vehicle. They have to carry their own tools for locking the vehicle, but this is inconvenient. In addition, it would be desirable if electrical vehicles can be charged while being parked and locked, to allow the user to have a full battery to drive home.

Docking stations for small vehicles are being used in some cities. However, these are often only compatible with vehicles that have been made especially for these docking stations, or require the user to attach an element to his vehicle, which is an inconvenient hurdle for using those docking stations.

It is an object of the invention to provide a flexible locking system, or at least provide an alternative to the prior art.

This object is achieved with a system for locking a small vehicle such as a bicycle or a scooter, comprising
- a vertical guiding system;
- a translational element configured for translational vertical movement over the vertical guiding system;
- a holder connected to the translational element, wherein the holder comprises a locking element configured to be arranged in
   - a locking position for restricting movement of a bar of the small vehicle, and
   - an unlocking position for arranging the bar in or out of the holder;
wherein the holder is configured to be rotated relative to the translational element around a rotation axis between at least a first position and a second position.

The invention thus relates to a system for locking a small vehicle. The small vehicle can e.g. be a micromobility vehicle. The small vehicle can e.g. be a bicycle, (kick) scooter (sometimes also referred to as step), kickboard. The small vehicle may e.g. comprise a propulsion source, e.g. an electrical motor, but can usually also in part be propelled by muscle power of a user. The small vehicle is not an automobile, bus, motorcycle, train, airplane, or helicopter.

A vertical guiding system is provided. The vertical guiding system can e.g. be supported by a ground surface, directly or indirectly. In that case, the vertical guiding system is thus not supported by the small vehicle. The vertical guiding system may e.g. be in a fixed position, e.g. being fixed to the ground. The vertical guiding system may e.g. extend in a vertical direction. The vertical guiding system is configured to guide a translational element for translational vertical movement. The vertical guiding system may e.g. comprise one or more vertical grooves, bars, or rods for guiding the translational element. In this context, "vertical" means that the vertical guiding system and the movement of the translational element are mainly vertical; however, it is envisaged that a small inclination is possible, e.g. an inclination of an angle measured relative to the vertical of 45 degrees or less, e.g. 30 degrees or less, e.g. 10 degrees or less.

The translational element may e.g. be arranged directly or indirectly on the vertical guiding system. For example, one or more rolling elements or bearings may be arranged between the translational element and the vertical guiding system. It is also possible that the translational element is arranged slidably on the vertical guiding system, e.g. on one or more rails of the vertical guiding system. The translational element may be moved over the vertical guiding system by any suitable mechanism, e.g. using a pulley-mechanism, a spring-mechanism, a motor. The translational element can e.g. comprise one or more slide elements for sliding over the vertical guiding system. The translational vertical movement allows to arrange the translational element at different heights.

A holder is connected to the translational element, which may be directly or indirectly via intermediate components. The holder is configured to move along with the translational element when the translational element is moved over the vertical guiding system for the translational vertical movement. Thus, by moving the translational element, the position, in particular the height, in which the holder is arranged can be controlled.

The holder comprises a locking element, which can be arranged in at least a locking position and an unlocking position. The holder may e.g. define a locking space. When the locking element is in the locking position, the locking space is closed by the locking element, e.g. a locking circumference of the locking space is closed. If at that moment a bar of the small vehicle is arranged in the locking space, the movement of said bar is restricted. That is, the bar cannot be taken out of the locking space. As such, the bar and therewith the small vehicle is locked. When the locking element is arranged in the unlocking position, an opening is provided in the locking circumference. Through said opening, the bar can be arranged in or out of the locking space. The holder may e.g. have a U-shape, a D-shape, an O-shape, a rectangular shape, or a triangular shape.

The holder is configured to be rotated relative to the translational element around a rotation axis between at least a first position and a second position. In the first position, the locking circumference is e.g. arranged in different angular position, e.g. in a different angle, than in the second position. Optionally, the holder can be rotated between more than two position, e.g. more than five positions, e.g. more than 10 positions, e.g. more than 50 positions, e.g. more than 100 positions, e.g. more than 150 positions. For example, the holder can be rotated in a rotation range, optionally having a maximum rotation angle, and be arranged in practically every position within said rotation range. The maximum rotation angle can e.g. be 250 degree or less, e.g. 180 degrees or less, e.g. 90 degrees or less, e.g. 45 degrees or less.

Thus, on the one hand, the vertical position of the holder, and thereby e.g. the locking space and locking circumference, can be adapted by movement of the translational element over the vertical guiding system. On the other hand, the angular position of holder, and thereby e.g. the locking space and locking circumference, can also be adapted by rotating the holder relative to translational element. This decoupled combination of degrees of freedom allows to adapt the holder in many different positions. This makes the system flexible, and thereby suitable for many different small vehicles, including bicycles with horizontal bar, bicycles without horizonal bar, (kick) scooters, and kickboards. In particular, the system can lock a bar of a small vehicle regardless of the angle at which the bar is arranged, because the holder can be rotated to fit the angle of said bar.

In embodiments, the rotation axis extends perpendicular to the vertical guiding system and/or horizontally. It has been found that providing this degree of freedom, in combination with the vertical translational movement, results in flexibility allowing to lock many types of vehicles.

In embodiments, the rotation axis coincides with a center axis of the holder. It has been found that this allows the rotation of the holder to be more intuitive and predictable. This makes it easier for the user to handle the system and arrange the holder in the correct position for the respective small vehicle.

In embodiments, the rotation axis intersects with a center axis of the vertical guiding system, optionally being perpendicular to a vertical and/or longitudinal center axis of the vertical guiding system. It has been found that this allows the rotation of the holder to be more intuitive and predictable. This makes it easier for the user to handle the system and arrange the holder in the correct position for the respective small vehicle.

In embodiments, the system comprises a connection pin configured to connect the holder to the translational element, wherein optionally the rotation axis extends through the connection pin, e.g. through a center axis of the connection pin.

In embodiments, the rotation axis coincides with a center axis of the translational element.

In embodiments, the rotation axis extends through a vertical slot of a housing of the system, wherein said housing comprises the vertical guiding system. Optionally the rotation axis further intersects with a center axis of said housing, e.g. e vertical and/or longitudinal center axis.

In embodiments, the holder comprises an electromagnetic lock for locking the locking element in the locking position. When the locking element is locked, it cannot be arranged into the unlocking position. If at that moment the bar of the small vehicle is arranged in the locking space, the small vehicle is thus locked. The electromagnetic lock may e.g. comprise a solenoid, e.g. being configured to control a retaining element configured to mechanically retain the locking element in the locking position.

In embodiments, the system comprises a control unit. Optionally, the control unit is configured to control the electromagnetic lock. The control unit can e.g. be configured to control whether electrical current is provided to the electromagnetic lock, e.g. to the solenoid. For example, the solenoid can be configured to create a magnetic force for locking the locking element in the locking position when the solenoid receives electrical current.

In embodiments, the system may further comprise a communication terminal. The communication terminal may e.g. be configured to receive a locking signal. The communication terminal may e.g. be configured for wireless communication. Optionally, the communication terminal is configured to be communicate with a user equipment device of a user, e.g. using a short-range communication method such as Bluetooth. Said user equipment device may e.g. be a smartphone or tablet. Optionally, the communication terminal is configured to be communicate with a cloud-based infrastructure, e.g. using an internet communication method such as Wi-Fi, 3G, 4G, 5G, or another suitable method. Optionally, the cloud-based infrastructure is configured to communicate with a user equipment device of a user.

In these embodiments, the user can thus communicate with the control unit, either directly or indirectly via the cloud-based infrastructure. As such, the user can control the electromagnetic lock, which allows him to activate the electromagnetic lock after he has arranged the bar of his small vehicle therein, or deactivate the electromagnetic lock when he wants to take the small vehicle out of the holder.

In embodiments, the holder comprises holder housing, wherein the electromagnetic lock is arranged in the holder housing. Optionally, the electromagnetic lock is arranged at first end of the holder housing, wherein the locking element is connected pivotable to the holder housing at a second end of the holder housing. Optionally, the first end of the holder housing is wider than the second end of the holder housing. Optionally, the holder housing is U-shaped, wherein a first leg of the U is wider than a second leg of the U, e.g. wherein the first end of the holder housing is at the first leg and the second end is at the second leg.

In embodiments, the electromagnetic lock comprises a retaining element, e.g. configured to be locked by the solenoid. The retaining element can e.g. be part of a lever configured to rotate around a lever pin. Optionally a spring is configured to bias the lever into a locking position. The locking element may further comprise a locking protrusion, wherein in the locking position the retaining element is configured to lock the locking protrusion.

In embodiments, the holder may comprise a locking sensor for detecting when the locking element is in the locking position and/or for detecting when the locking element is in the unlocking position. Optionally, the locking sensor is configured to generate a sensor signal. The control unit can e.g. be configured to receive the locking signal. The locking sensor can e.g. be a push sensor.

In embodiments, the system further comprises a housing, wherein the vertical guiding system is arranged in the housing and the holder is arranged outside of the housing. Optionally, the housing comprises a vertical slot for allowing the translational vertical movement of the translational element and the holder. Optionally, further components are arranged in the housing, e.g. the control unit and/or communication module.

In embodiments, the vertical guiding system is configured to limit the translational vertical movement of the moveable lock between a minimal height and a maximal height measured from a ground level. For example, the minimal height is at least 25% of the maximal height, e.g. at least 33%of the maximal height, e.g. at least 50% of the maximal height, e.g. at least 60% of the maximal height. It has been found that this is sufficient vertical movement for enabling a wide range of vehicles to be locked. Since the possible movement is limited, the vertical guiding system does not have to extend all the way to the ground level. This allows to arrange other components under the vertical guiding system, e.g. electrical components such as the control unit, or electrical connection to power supplies. By arranging these components under the vertical guiding system, the housing can be made smaller, and the system occupies less space.

In embodiments wherein the system comprises the housing with the vertical slot, said vertical slot may accordingly have a minimal slot height and a maximal slot height measured from a ground level. For example, the minimal slot height is at least 25% of the maximal slot height, e.g. at least 33% of the slot maximal height, e.g. at least 50% of the maximal slot height, e.g. at least 60% of the maximal slot height.

In embodiments, the minimal height and/or the minimal slot height may e.g. be at least 350 mm, e.g. at least 450 mm, e.g. approximately 500 mm. In embodiments, the maximal height and/or maximal slot height may e.g. be 1000 mm or less, e.g. 900 mm or less, e.g. approximately 800 mm.

In embodiments, the vertical slot may e.g. have a width between 15-30 mm, e.g. between 20-25 mm.

In embodiments, the housing may e.g. have a height between 800-1000 mm measured from the ground level, e.g. between 850-950 mm, e.g. between 890-910 mm. In embodiments, the housing may e.g. have a width between 150-250 mm, e.g. 180-200 mm. In embodiments, the housing may e.g. have a depth between 100-200 mm, e.g. between 150-170 mm.

In embodiments, the holder is configured to be rotated relative to the translational element in a rotation range having a maximum rotation angle, wherein the maximum rotation angle is 250 degree or less, e.g. 180 degrees or less, e.g. 90 degrees or less, e.g. 45 degrees or less. For example, the maximum rotation angle can be 250 degrees, or 180 degrees, or 90 degrees, or 45 degrees. Limiting the rotation to the rotation range, can in particular be advantageous when electrical cables are provided in the holder, e.g. to provide power to an electromechanical lock. In such cases, limiting the rotation to the maximum rotation angle prevents that the electrical cables become tangled and/or damaged.

Optionally, the translational element comprises at least one rotation range limiter for limiting rotation of the holder, e.g. a first rotation range limited for limiting rotation in a first direction and a second rotation range limited for limiting rotation in a second direction. Optionally, the holder comprises a rotation limiter engager, e.g. provided on a connection pin for connecting the holder to translational element. The rotation limited engager can e.g. be configured to engage the at least one rotation range limiter when the holder is rotated at the maximum rotation angle. The rotation range limiter and/or the rotation limiter engager can e.g. be embodied as pins.

In embodiments, the system further comprises a pulley-system for positioning the translational element on the vertical guiding system. For example, the pulley system may comprise a belt connected to the translational element, for which the translational element e.g. comprises a pulley belt holder. The pulley-system may e.g. comprise a counterweight connected to the belt, configured to keep the translational element in a position on the vertical guiding system. The vertical guiding system may e.g. comprise one or more rails over which the translational element is configured to slide during the vertical translational movement. The translational element can e.g. comprise one or more slide elements for sliding over the vertical guiding system.

In embodiments, the system comprises a spring-system comprising at least one spring for positioning the translational element on the vertical guiding system.

In embodiments, the system further comprising a charging module configured to provide electrical power for charging the small vehicle. When the small vehicle is an electrical vehicle, the charging module advantageously allows a user to charge the small vehicle when it is being locked and parked. The charging module may e.g. be configured to a power supply for receiving electrical power. The charging module may e.g. comprise a voltage transformer configured to transform the voltage from the power supply to a lower voltage for charging the small vehicle.

In embodiments, the charging module comprises a retractable cable. For example, if the vertical guiding system is arranged in a housing, said housing may comprise a charging module opening through which the retractable cable extends. The retractable cable may be biased towards a retracted position, e.g. by means of a resilient member or spring. The retractable cable may e.g. be biased towards a curled position which causes the retractable cable to be arranged in the retracted position. A user can grab the retractable cable and pull on it to bring a charging end of the retractable cable in the vicinity of the small vehicle, and connect a dedicated charging outlet of the charging module to a charger connection of the small vehicle. When user disconnects the dedicated charging end, the retractable cable may automatically retract. As a result, the retractable cable is not laying around outside the housing when it is not being used, which avoids unintentional damage. Optionally, the system can comprise a cable shielding configured to shield an outer end of the retractable cable when the retractable cable is in the retracted position.

In embodiments, the charging module comprises a cable, e.g. the retractable cable, with a charging end, wherein the charging end comprises a plurality of charging outlets. For example, at the charging end the cable may diverge into a plurality of branches, each having different types of charging outlets. Since the system is suitable to lock a wide variety of small vehicles, it is advantageous if the system is also able to charge a wide variety of electrical vehicles. In practice, however, different manufactures use different types of chargers with different charging outlets. By providing a single cable with a plurality of charging outlets, the system can be used for a wide variety of small vehicles. For example, the charging cable may comprise: a first e-scooter charging outlet; a second e-scooter charging outlet; a first e-bike charging outlet; a second e-bike charging outlet. Optionally, the charging cable may comprise one or more of the following charging outlets: an 8 mm male DC outlet, e.g. having an external diameter of 8mm and an internal diameter of 5.5mm; e.g. a 5.5 mm coaxial female plug, e.g. having an external diameter of 5.5 mm and an internal diameter of 2.5 mm; a 3-pin inline connector; e.g. a 6-pin E-bike charging outlet; a 3 pin XLR; a 5-pin XLR; a DC jack; an RCA; a Rosenberger RoPD.

In embodiment, a control unit is configured to detect when the charging module is being used for charging a small vehicle. Optionally, the control unit is further configured to detect how much energy is provided to the small vehicle during charging. Based on this, a charging cost can e.g. be determined. The control unit may e.g. be configured to determine said charging cost, or the control unit can be in communication with an external device or platform such as a cloud-based infrastructure, which is configured to determine said charging cost.

The invention further relates to a docking station for locking a plurality of small vehicles, wherein the docking station comprises a plurality of systems for locking a small vehicle according to one or more of the embodiments described herein. For example docking system may comprise at least four, five, six, eight, ten, or fifteen systems for locking a small vehicle. The systems for charging a small vehicle may e.g. be modular for being provided as modules. This advantageously allows as to how many systems the docking station comprises, based on the specific needs or space available.

The docking station may e.g. comprise a main housing comprising a first vertical guiding system, vertical slot, and allowing movement of a first holder. The main housing may e.g. comprise a main control unit. The docking station may e.g. comprise a support, optionally comprising a cable recess for arranging one or more cables between the main housing and the housings of the other systems. Said support may e.g. support each of the housings and vertical guiding systems, and said support may be supported by a ground surface. The cable recess may e.g. be provided below the support.

In embodiments, the plurality of systems are arranged such that a holder of a first system is arranged between a housing of a first system and a housing of a second system. For example, said systems may e.g. be arranged in a row, e.g. wherein the respective holders are arranged between two systems, e.g. for arranging the small vehicle between two systems. This allows to arrange the plurality of systems close to each other without the small vehicles obstructing the space of another small vehicle.

In embodiments, the plurality of systems are arranged such that the rotation axes of the systems are parallel and optionally coincide when the respective translational elements are arranged at the same height on the respective vertical guiding systems. It has been found that providing the rotational degree of freedom in these relative positions allows for a compact docking station that is user-friendly.

In embodiments, the distance from a first middle between a first system and second system to a second middle between the second system and a third system is between 500-800 mm, e.g. 600-700 mm, e.g. 625-675 mm.

The invention further relates to a method for locking a small vehicle. Although the method can be performed with the system according to the invention; neither the system, nor the method is limited thereto. Features explained herein with reference to the system have the same meaning with respect to the method unless explicitly defined otherwise. Features explained with reference to the system can be applied mutatis mutandis to the method to achieve the similar advantages.

The object of the invention can e.g. be achieved with a method for locking a small vehicle, comprising a step of using a system or docking station according to any embodiments described herein.

The object of the invention can e.g. be achieved with a method for locking a small vehicle, comprising a step of arranging a translational element on a locking height by providing a translational vertical movement of the translational element over a vertical guiding system; a step of arranging a holder from a first position to a second position by rotating the holder relative to the translational element; a step of arranging a bar of the small vehicle in the holder while a locking element of the holder is in an unlocking position; and a step of arranging the locking element in a locking position.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig. 1a-1b schematically show a docking station from different angles;
Fig. 1c schematically shows the docking station wherein the holders are arranged in different positions;
Fig. 1d schematically illustrates that different types of small vehicles can be locked using the docking station;
Fig. 2a-2f schematically illustrate an embodiment of a system for locking a small vehicle;
Fig. 3a-3c schematically illustrate another embodiment of a system for locking a small vehicle;
Fig. 4a-4e schematically illustrate embodiments of a holder;
Fig. 5a-5b schematically illustrate a charging module for charging a small vehicle;
Fig. 6 schematically illustrates an example of how a system or docking station can be controlled.

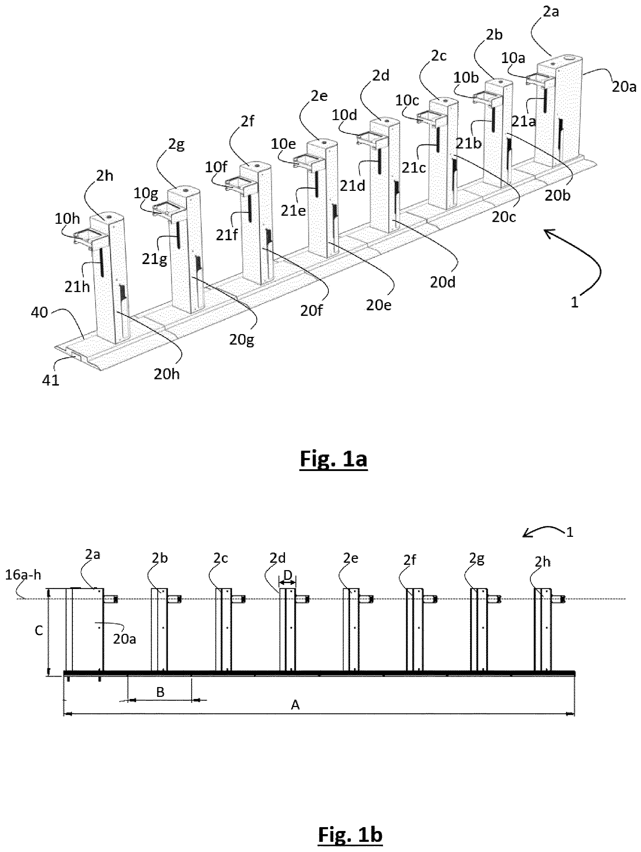

Fig. 1a-1d show docking stations 1 in different situations and from different angles. In the shown embodiments, the docking stations 1 comprise eight systems 2a-2h for locking a small vehicle; however, it also possible that a docking station 1 comprises more or less systems 2 than eight.

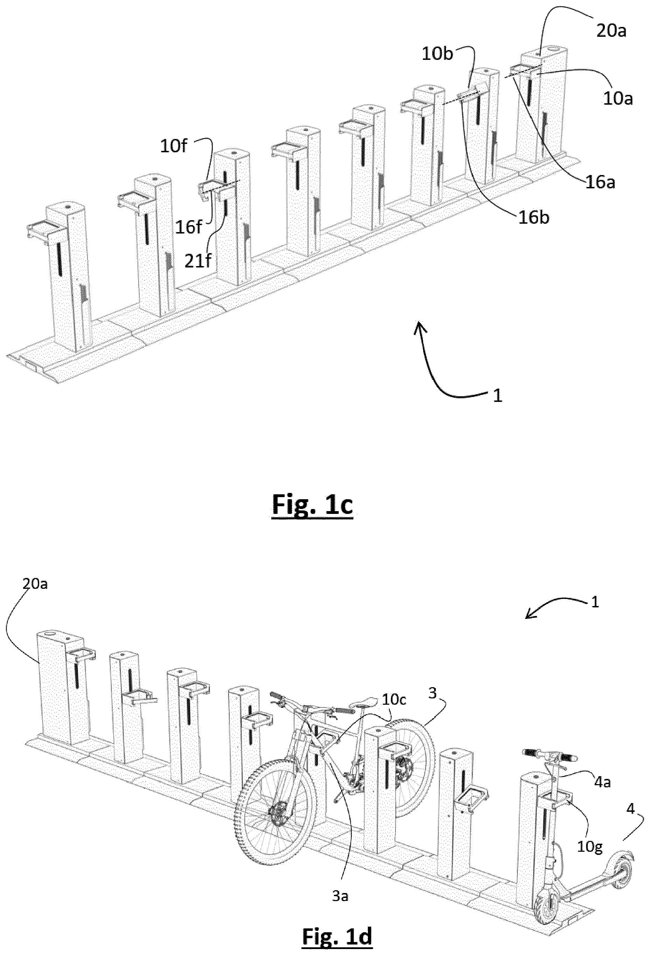

Each system 2a-2h comprises a housing 20a-20h which in turn comprises a vertical slot 21a-21h. The vertical slots 21a-24h extend vertically. A holder 10a-10h is arranged outside of each housing 21a-21h. The vertical slots 21a-21h allow the holders 10a-10h to be moved vertically to be arranged at different heights. In addition, it is possible to rotate the holders 10a-10h. This is e.g. illustrated in fig. 1c, where holder 10a is in a first position and holder 10b is rotated into in a second position. In addition, holder 10f is arranged at a lower height.

The rotation of each holder 10a-h is around a respective rotation axis 16a-h. Fig. 1c illustrates that the rotation axis 16a of holder 10a is parallel with the rotation axis 16b of holder 10b, and the rotation axis 16f of holder 10f. Fig. 1b even illustrates that when one or more of (in this case all) the holders 10a-h are arranged at the same vertical height, their respective rotation axes 16a-h coincide.

As is illustrated in fig. 1d, the holders 10a-10h are configured for locking a small vehicle 3, 4. A bar 3a, 4a of the small vehicle 3, 4 can be arranged in the holder 10a-10h, wherein the holder 10a-10h is configured to restrict a movement of said bar 3a, 4a. Since the holders 10a-10h can be moved vertically and can be rotated, it is possible to lock a wide variety of small vehicles 3, 4 with the docking station 1. This is e.g. illustrated in fig. 1d, where a first small vehicle 3 being a bicycle 3 is locked. The bar 3a by which the bicycle 3 is locked is in this case a downtube 3a. The holder 10c is therefore lowered a bit from an upper position and rotated. It will be understood, however, that depending on the type of bicycle any suitable bar can be chosen to lock the bicycle, thanks to the flexibility of the holder 10c.

A second small vehicle 4 shown in fig. 1d is a (kick) scooter 4, also sometimes referred to as a step. The bar 4a by which the scooter 4 is locked is an upright bar 4a. The respective holder 10g can be arranged at different heights to lock this bar 4a, and can e.g. remain in the first position. As can be seen, the docking station 1 is very flexible and therefore able to lock a wide variety of small vehicles.

Fig. 1a further illustrates that the systems 2a-2h are indirectly supported by a ground surface by means of a support 40. The support 40 comprises a cable recess 41 which provides space for cables to be arranged under the docking station 1. Said cables can e.g. extend from a main housing 20a to each system 2a-2h for controlling an electromagnetic lock and/or providing electrical energy for charging an electrical small vehicle. For example, when the bicycle 3 or scooter 4 are electrical, it is advantageous if they can be charged while they are locked.

Figs. 1a-1d also illustrates that a first system 2a may comprise a main housing 20a. The main housing 20a may e.g. comprise a main control unit for controlling the docking station 1, and/or a main power supply for supplying power to the systems 2a-2h. By combining the main housing 20a with the first system 2a, the docking station 1 can advantageously be made relatively compact. This can in particular be advantageous when the docking system 1 is used in urban areas where available space may be limited.

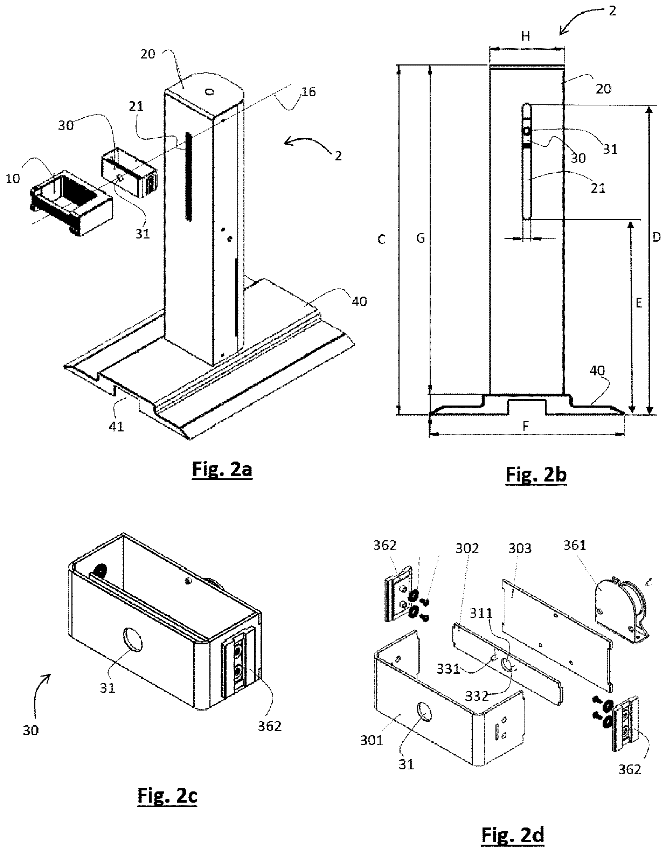

Also visible in figs. 1a, 1c, 1d is that the vertical slots 21a-21h do not extend all the way to the bottom of the housing 20a-h. With reference to fig. 2b, when measured from a ground level, a maximal slot height D can e.g. be 800 mm, and a minimal slot height E can e.g. be 500 mm. It has been found that this is sufficient for locking a wide range of small vehicles. Since the vertical slot 21a-21h does not extend further, it is possible to arrange other components below the vertical guiding system which allows the vertical movement, thereby each housing and the docking station compact.

For example, with reference to figure 1b, a distance B from a middle between a first system 2a and a second system 2b to a middle between the second system and a third system 2c can be approximately 650 mm. The total length A of a docking station comprising eight systems 2a-2h can be less than 5500 mm, e.g. approximately 5200 mm. A height C of each housing 20a-h (including the main housing 20a) can e.g. be less than 1000 mm, e.g. approximately 950 mm. A depth D of a housing can e.g. be less than 200mm, e.g. less than 180 mm, e.g. approximately 160 mm.

Fig. 1a-1d further illustrate that the systems 2a-2h, and in particular the holders 10a-10h, are arranged such that the small vehicles 3,4 are arranged between two systems 2a-2h when being locked. This advantageously results in an organized arrangement when multiple small vehicles are locked, and avoids that these small vehicles obstruct each other.

Fig. 2a-2e illustrate an embodiment of a system 2 for locking a small vehicle. Fig. 2a shows a partially exploded view of the system 2. The housing 20, the vertical slot 21, and the holder 10 are visible. In addition a translational element 30 is shown. During use, the translational element 30 is arranged in the housing 20, as illustrated in the front view in fig. 2b. The translational element 30 comprises a holder connector 31 for connecting the holder 10 to the translational element 30. In this case, a connecting pin of the holder 10 can be arranged in the holder connector 31. The holder connecter 31 can e.g. be threaded.

The translational element 30 is configured for a translational vertical movement within the housing 20. During said translational vertical movement, the holder 10 moves along with the translational element 30. This allows to adjust the height at which the holder 10 is arranged based on the small vehicle that is to be locked.

The rotation axis 16 around which the holder 10 can be rotated is indicated in fig. 2a. it can be seen that the rotation axis 16 extends through a center axis of the holder 10, and in this case also through a center axis of the translational element 30, in particular through the holder connecter 31. In addition, the rotation axis 16 extents through the vertical slot 21.

A width H of the housing 20 as indicated in fig. 2b can e.g. be less than 200 mm, e.g. approximately 190 mm. A height G measured from the support 40 can e.g. be approximately 900 mm, while a width F of the support 40 can e.g. be approximately 500 mm.

Fig. 2c illustrates the translational element 30, and fig. 2d shows an exploded view thereof. In the shown example, the translational element 30 comprises a front part 301, a middle part 302, and a back part 303. It will be understood, however, that many other implementations are possible.

The translational element 30 comprises rotation range limiters 331, 332, in this case embodied as rotation blocking pins 331, 332. The rotation range limiters 331, 332 extend from the middle part 302. The middle part 302 further comprises a further holder connecter 311 configured to receive the connecting pin of the holder. The holder may comprise a range limiter engager which is configured to engage the range limiters 331, 332 when being rotated. When the rotation range limiters 331, 332 and the rotation range limiter engager have been brought into an engaging position, the holder 10 cannot further be rotated in that direction. As such, the rotation range of the holder 10 is limited.

The translational element 30 further comprises a pulley belt holder 361, in this example arranged on the back part 303. The pulley belt holder 361 is configured to receive a pulley belt, such that the translational element 30 can be connected to a pulley system. The translational element 30 can be arranged and/or maintained in the desired vertical position by means of the pulley system.

The translational element 30 further comprises slide elements 362, in this example arranged on sides of the front part 301. The slide elements 362 are configured to cooperate with a vertical guiding system, in this case comprising rails. The vertical guiding system guides the translational element 30 when being moved, such that the movement of the translational element 30 is a translational vertical movement.

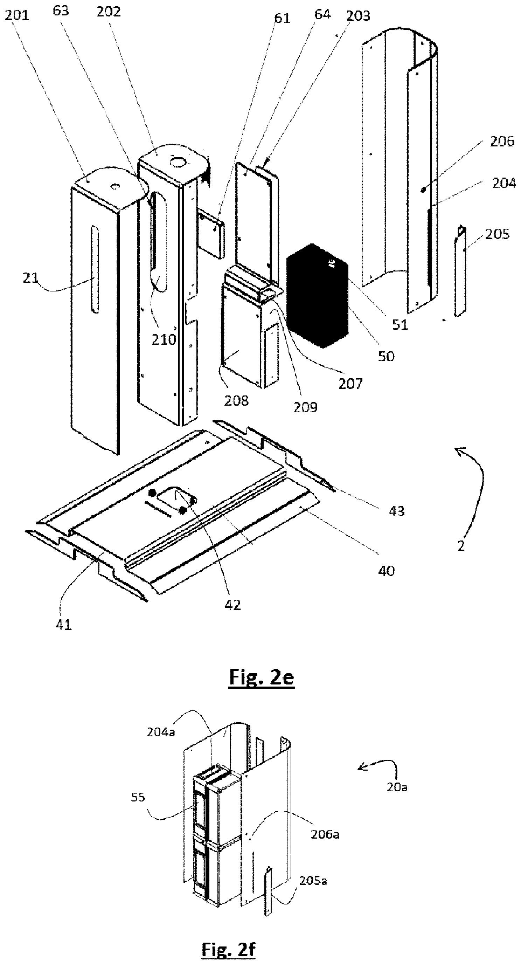

Fig. 2e shows an exploded view of the system 2. In this example, the housing comprises a first part 201, a second part 202, a third part 203, and a fourth part 204. It will be understood, however, that other implementations are possible. The first part 201 is arranged at the front, and comprises the vertical slot 21. The second part 202 is arranged behind the first part 201 and comprises a larger slot 210.

The translational element (not shown in fig. 2e) is arranged behind the second part 202. Fig. 2e shows a vertical guiding system 63, in this case comprising a rail 63, which is configured to cooperate with the slide element of translational element. Although not visible in fig. 2e, it will be understood that also on the other side of the second part 202 a vertical guiding system embodied as a rail is provided.

The pulley belt connected to the pulley belt holder of the translational element is connected to a counterweight 61. The counterweight 61 is configured to maintain the translational element and as such the holder on a given vertical height. During use the counterweight 61 is arranged behind a guiding wall 64, to limit the moveability of the counterweight 61 in horizontal direction.

The vertical slot 21 does not extend all the way to the bottom of the housing. It has been found that this is satisfactory to lock a wide variety of small vehicles. Advantageously, the vertical guiding system 63 does not need to extend all the way to the bottom either. This allows to use the space below the pulley system, the vertical guiding system 63 and the counterweight 61 for other components. The housing can thus be made smaller, and the space occupied by the system 2 and the docking station can be reduced. This is e.g. illustrated by the compact docking station shown in fig. 1b.

In the example shown in fig. 2e, an electrical housing 50 is arranged below the pulley system. The third part 203 comprises a horizontal wall 207 above the electrical housing 50 and a front wall 208 in front of the electrical housing 50. The electrical housing 50 may comprise one or more electrical components.

The fourth part 204 comprises a cable opening 206 through for a charging cable. The charging cable can e.g. be a retractable cable. The charging cable can be used to charge the small vehicle while being locked, when the small vehicle is an electrical vehicle. The charging cable can extend from a cable outlet 51 of the electrical housing 50 through a cable inner opening 209 of the third part 203. A cable shielding 205 can further be provided on the fourth part 204 to protect the charging cable.

Fig. 2e further illustrates that the support 40 comprises a support cable opening 42. When installed, electrical cables may be arranged in the cable recess 41 under the support 40. The support cable opening 42 is arranged below the electrical housing 50, such that the desired cables can be connected towards the electrical housing 50.

The support 40 comprises further modular connection 43 which allows to connect a system 2 as a modular unit to other systems 2 for forming the docking station. Depending on the need and/or available space, any desired number of systems 2 can be modularly connected to form the docking station.

Fig. 2f schematically illustrates a part of a main housing 20a. In this example, the main housing 20a can be embodied in the same way as the system 2 shown in fig. 2e, except for the fourth part 204a, which is therefore isolated for illustration. In comparison to the fourth part 204 in fig. 2e, the fourth part 204a in fig. 2f is larger. This allows to provide a main electrical housing 55. The main electrical housing 55 may e.g. comprise a main control. The main electrical housing 55 may e.g. be connected to mains power supply on the one hand, and to electrical housings 50 of one or more systems 2 of the docking station on the other hand, for providing power to said systems.

Fig. 2f further illustrates that the main housing 20a also comprises a cable opening 206a and a cable shielding 205a. Although not shown, the main housing 20a also comprises a vertical guiding system which guides a translational element and holder. Thus, with the main housing a system for locking a small vehicle and the main electrical housing 55 are combined, while in convention systems these are often provided separately. Advantageously, less space is occupied by the docking station.

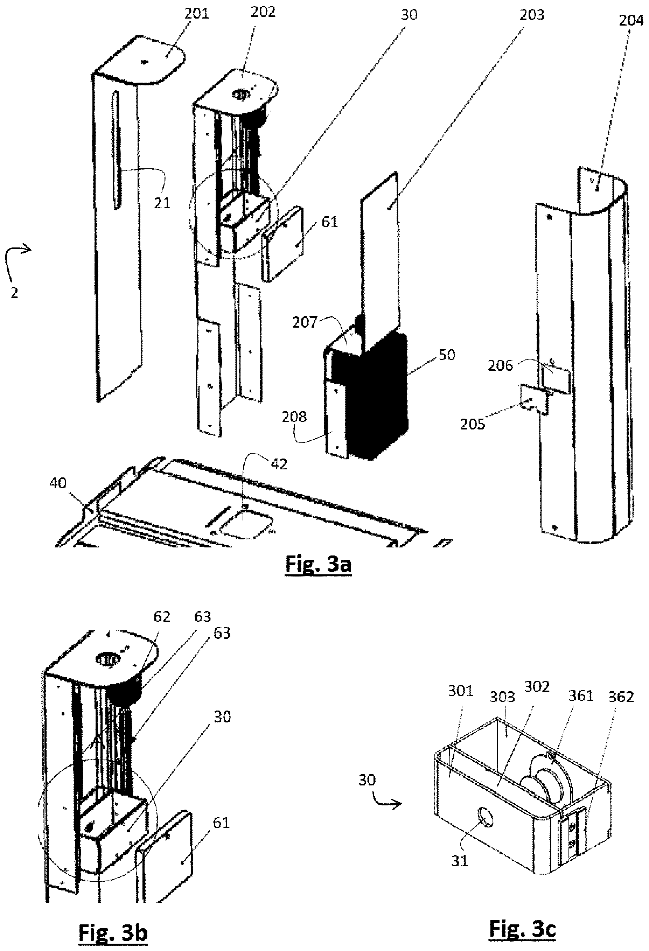

Fig. 3a-3c show another embodiment of the system 2, wherein like features are indicated with like reference numerals. A first difference with the embodiment shown in fig. 2a-2e is that the cable shielding 205 Is a cover for the cable opening 206, which can be removed to access the charging cable.

A second difference is that the translational element 30 is embodied slightly differently. As can be seen in fig. 3c, the pulley belt holder 361 is arranged on the inside of the back part 303.

Illustrated in fig. 3b is further that the vertical guiding system 63 comprises two rails 63, one on both sides of the second part 202.

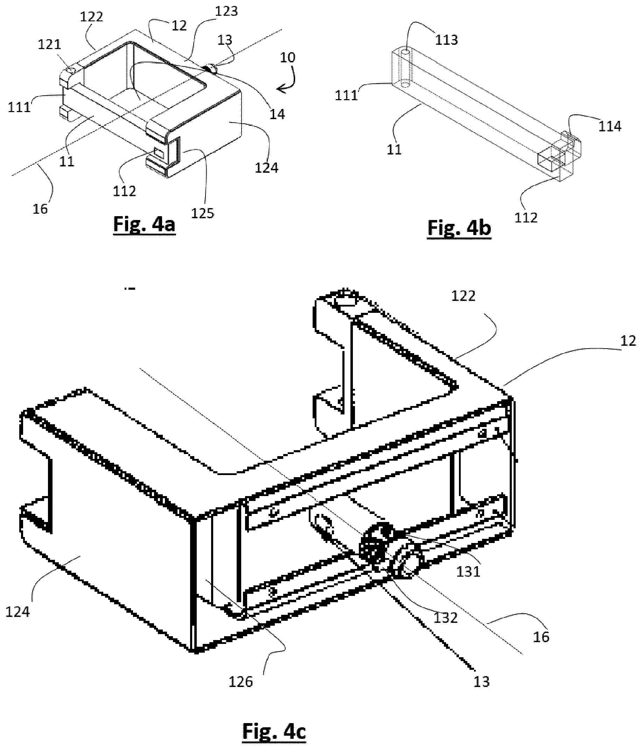

Fig. 4a-4e illustrate embodiments of the holder 10. Fig. 4a shows that the holder 10 comprises a locking element 11 and a holder housing 12. Together the locking element 11 and the holder housing 12 define a locking space 14. The locking element 11 can be arranged in a locking position as shown in fig. 4a. If a bar of small vehicle is arranged in the locking space 14, the holder 10 can restrict the movement of said bar. As such, the bar and the vehicle are locked.

In the shown example holder housing 12 is U-shaped, having a first leg 124, a bottom leg 123, and a second leg 122. A second end 111 of the locking element 11 is pivotally connected to the second leg 122. A pivoting pin 121 is arranged in a pivoting slot 113 of the locking element 111, which is visible in fig. 4b. By pivoting the locking element 11, a first end 112 of the locking element 11 can be moved away from a receiving recess 125 of the first leg 124 off the holder housing 12. As such, the locking element 11 can be arranged in an unlocking position, allowing to arrange the bar of the small vehicle into or out of the locking space 14.

Fig. 4b further illustrates that the locking element 11 may comprise a locking protrusion 114 at the opening end 112. The locking protrusion 114 can be arranged into the first leg 124 of the holder housing 12, where it can be fixed for fixing the locking element 11 into the locking position.

Fig. 4c illustrates the holder housing 12 from behind. A connection pin 13 extends from the holder housing 12. The connection pin 13 can be arranged in a holder connector 31 of the translational element. The connection pin 13 can e.g. comprise a threaded part 131 for making said connection. The connection pin 13 further comprises a rotation range limiter engager 132, which in this case is a pin extending from the connection pin 13. When the holder 10 is being rotated relative to the translational element, the rotation range limiter engager 132 eventually engages one the rotation range limiters of the translational element. At that point, the holder 10 cannot be rotated further, meaning that a maximum rotation angle of the rotation range is defined.

The rotation axis 16 is visible in fig. 4a and 4c, and coincides with a center axis of the holder 10. In addition, the rotation axis coincides with a longitudinal center axis of the connection pin 13. This has been found to make the rotation of the holder 10 intuitive for the user.

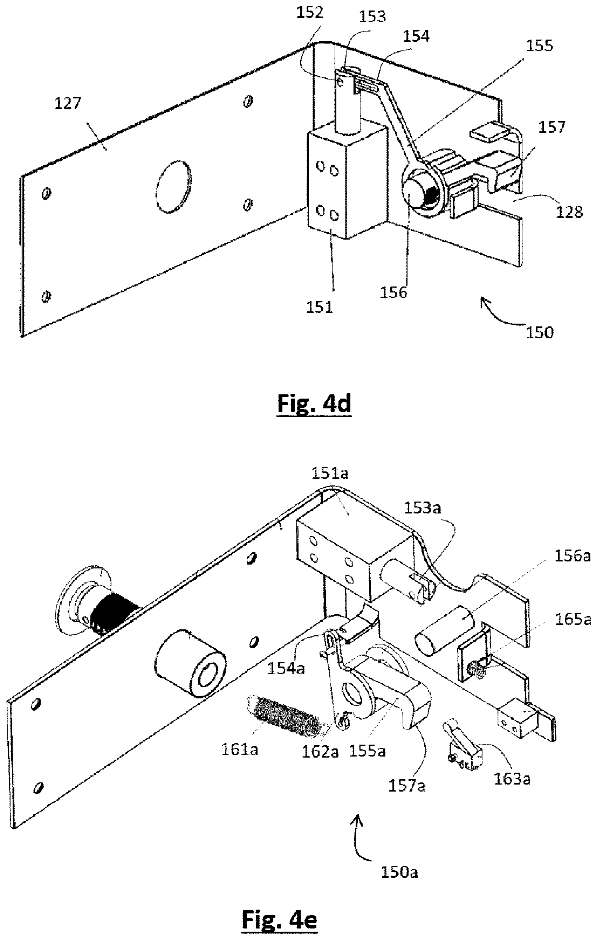

It can also be seen in fig. 4c that the first leg 124 and the second leg 122 are hollow. This allows to reduce the weight of the holder housing 12, making it easier for a user to manipulate the holder 10. Furthermore, the first leg 124 is wider than the second leg 122. The first leg 126 defines a first leg space 126, in which an electromagnetic lock 150 can be provided, as is illustrated in fig. 4d.

The electromagnetic lock 150 is arranged in a lock housing 127 and comprises a solenoid 151 which can e.g. be controlled by a control unit (not shown). In particular, a solenoid lock 152 can be controlled for locking an arm 154 of a lever 155 that is arranged in a solenoid slot 153. The lever 155 can be rotated around a lever pin 156. A protrusion opening 128 for receiving the locking protrusion 114 is provided. The locking protrusion 114 interacts with a retaining element 157 when arranged into the protrusion opening 128. When solenoid lock 152 is locked, the locking protrusion 114 is locked by the retaining element 157 and cannot be taken out of the protrusion opening 128. The locking element 11 is thus locked in the locking position and the bar of the small vehicle cannot be taken out of the locking space 14.

Fig. 4e schematically illustrates an exploded view of another embodiment of an electromagnetic lock 150a. In this example, the solenoid 151a is arranged vertically, while in fig. 4d the solenoid 4a was arranged horizontally. In fig. 4e the lever 155a is also embodied differently, although the main working principle remains the same: an arm 154a of the lever 155a can be locked in the solenoid slot 153a. The lever 155a rotates around a lever pin 156a, and a retaining element 157a can lock the locking protrusion of the locking element.

In addition, a first spring 161a is provided which is connected to the lever 162a at a spring connection 162a. The spring biases the lever 155a towards the position for locking the locking element. This ensures that after the user has inserted the locking protrusion, the lever 155a is automatically arranged in the position that allows to lock it with the solenoid 151a.

A second spring 165a is further configured to engage the locking protrusion of the locking element. This positions the locking element correctly and avoids damage when a user closes the locking element with excessive force.

A locking sensor 163a is further illustrated, which in this example is a push sensor. When the locking protrusion is locked by the retaining element 157a, said locking protrusion engages the push sensor. The push sensor 163a generates a sensor signal which is communicated to the control unit (not shown), based on which the control unit can determine that the locking element is in the locking position.

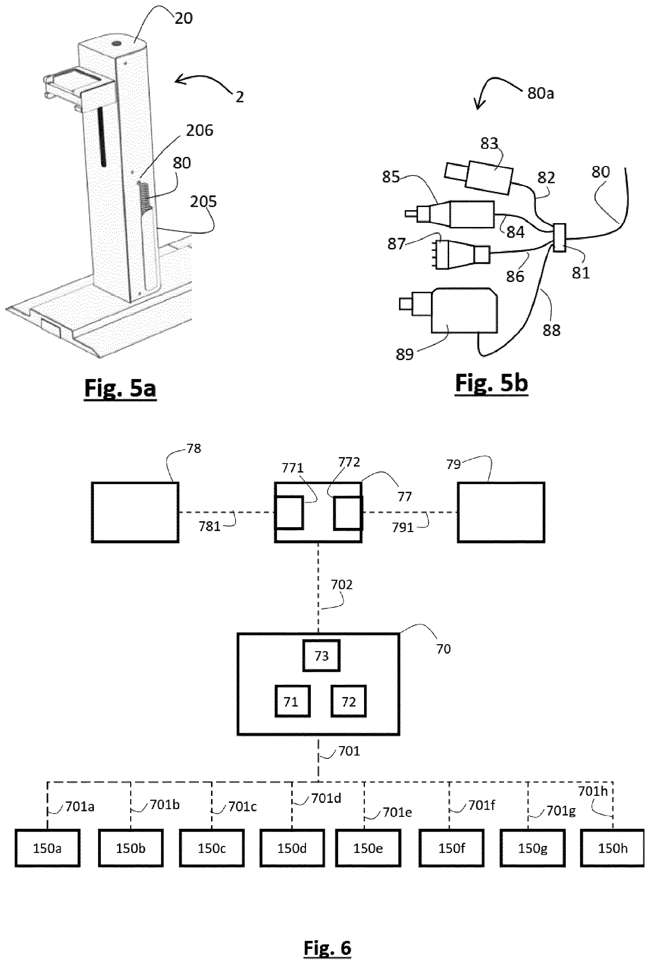

Fig. 5a illustrates that the system 2 may comprise a retractable cable 80, which in this case extends out of the cable opening 206. Inside the housing 20, the retractable cable 80 is connected to a power supply in the electrical housing. In the shown example, the retractable cable 80 is biased towards a curled position as shown. In the retracted position, the cable shielding 205 protects the retractable cable 80.

A user can take the retractable cable and elongate it out of the retracted curled position by pulling on it. The user can then bring it towards a charging inlet of the electrical small vehicle and charge the small vehicle while it is being locked.

Since the system 2 and the docking station have the advantage of being flexible and suitable for locking many different types and brands of small vehicles, it is to be expected that these small vehicles may have different types of charging inlets. Fig. 5b illustrates that the retractable cable 80 has a charging end 80a having a plurality of charging outlets 83, 85, 87, 89. In this example the retractable cable 80 comprises a cable splitter 81 where the retractable cable 80 diverges in a plurality of branches 82, 84, 86, 88 connected to the charging outlets 83, 85, 87, 89.

In the shown example, the plurality of charging outlets 83, 85, 87, 89 includes a first e-scooter charging outlet 83; a second e-scooter charging outlet 85, a first e-bike charging outlet 87; a second e-bike charging outlet 89. Advantageously, a wide range of small vehicles can be charged with these outlets.

By way of example, the first e-scooter charging outlet 83 is an 8 mm male DC outlet, e.g. having an external diameter of 8mm and an internal diameter of 5.5mm. The second e-scooter charging outlet 85 is a 5.5 mm coaxial female plug, e.g. having an external diameter of 5.5 mm and an internal diameter of 2.5 mm. The first e-bike charging outlet 87 is a 6-pin E-bike charging outlet.

Fig. 6 schematically illustrates an example of how a system or docking station according to the invention can be controlled. A control unit 70, in this case a main control unit, is illustrated, which in this example controls eight electromechanical locks 150a-150h of a docking station having eight respective systems for locking a small vehicle. In other embodiments, it is also possible that in addition or alternatively, each system for locking a small vehicle comprises an individual control unit.

The control unit 70 comprises a processing unit 71 and a memory 72. The memory 72 can e.g. store computer-readable instructions, data regarding the status electromagnetic locks 150a-150h, data regarding received signals, etc. The processing unit 71 is configured to process, receive, and transmit signals, and/or to process or store date on the memory 72, e.g. based on the computer-readable instructions.

The control unit 70 comprises a communication terminal 73. In this example, the communication terminal 73 is configured to communicate with a cloud-based infrastructure 77 by means of cloud-communication signal 702. The cloud-communication signal 702 is a wireless signal that uses an internet communication method, e.g. 3G, 4G, or 5G. Via the cloud-communication signal 702, the main control unit 70 can e.g. communicate to the cloud-based infrastructure 77 what the status is of one or more of the electromagnetic locks 150a-150h. The cloud-based infrastructure 77 may communicate control instructions to the main control unit 70 via the cloud-communication signal 702 which may e.g. comprise a locking signal, based on which the main control unit 70 controls one or more of the electromagnetic locks 150a-150h.

The cloud-based infrastructure 77 comprises a user platform 771 configured to be in communication with a user equipment device 78 by means of a user signal 781. The user equipment device 78 can e.g. be a smartphone or tablet, and is controlled by a user who wants to lock a small vehicle at the docking station. When the user arrives at the docking station, he can indicate via his user equipment device 78 and the use signal 781 the desire to lock the small vehicle. The cloud-based infrastructure 77 then communicates to the control unit 70 which electromagnetic lock 150a-h to unlock. The control unit 70 send accordingly a control signal communicated via communication signal 701a-h to the respective electromagnetic lock 150a-h. It is then signaled to the userwhere to lock his small vehicle, e.g. via the user equipment device 78 or by having a visual orauditive signal on the respective system for locking the small vehicle. The user then arranges the holder of the respective system in the correct vertical and angular position based on his small vehicle, arranges the bar in the locking spaces, and arranges the locking element into the locking position. The locking sensor comprise by the electromagnetic lock 150a-h generates a locking signal communicated via communication signal 701a-h to indicate that the locking element is arranged in the locking position. The control unit 70 then controls the respective electromagnetic lock 150a-h to be locked. When the user wants to unlock his small vehicle, he can indicate this again on his user equipment device 78, and the electromagnetic lock 150a-h can in a similar way be unlocked. This allows the user to arrange the locking element into the unlocking position and remove his small vehicle.

In the shown embodiment having a main control unit 70, said control unit 70 can be arranged in a main housing 20a as was shown in fig. 1a. The control unit 70 may be connected to the electromagnetic locks 150a-h by wires for sending the control signals 701a-h. Said wires may be arranged in the cable recess 41.

The control unit 70 in fig. 6 may further be configured to monitor whether the user uses the charging cable for charging his small vehicle, and if so, optionally also how much power is consumed during said charging. The control unit 70 communicate this to the cloud-based infrastructure 77.

The cloud-based infrastructure 77 comprises a manager platform 772 which is configured to communicate with a manager device 79 via a manager signal 791. The manager device 79 is used by a manager party who manages the docking station. This can e.g. be a private company in an urban area which installed the docking station to be used for its employees. In addition or alternatively, it is possible that said managing party makes the docking station available for users other than its employees. Generally, the manager party can also control the electromagnetic locks by controlling the control unit 70 via the manager signal 791. This can e.g. be useful when the user equipment device 78 of the user has run out of battery power and the user cannot unlock his small vehicle himself.

The cloud-based infrastructure 77 can further be configured for accommodating different payment models of the user. For example, if the user is an employee of the manager party or has a subscription to the docking station, the use thereof can be free of charge for the user. In other cases, the user may be charged a fee which is paid to the manger party. Said fee may e.g. be based on the time period the small vehicle is locked, and on whether and/or how much energy is consumed for charging the small vehicle.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A system for locking a small vehicle such as a bicycle or a scooter, comprising
• a vertical guiding system;
• a translational element configured for translational vertical movement over the vertical guiding system;
• a holder connected to the translational element, wherein the holder comprises a locking element configured to be arranged in
∘ a locking position for restricting movement of a bar of the small vehicle, and
∘ an unlocking position for arranging the bar in or out of the holder;
wherein the holder is configured to be rotated relative to the translational element around a rotation axis between at least a first position and a second position.

2. The system according to claim 1, wherein said rotation axis extends perpendicular to the vertical guiding system and/or extends horizontally, and coincides with a center axis of the holder.

3. The system according to claim 1 or claim 2, wherein the holder comprises an electromagnetic lock for locking the locking element in the locking position.

4. The system according to claim 3, wherein the system further comprises a control unit configured to control the electromagnetic lock, and communication module configured to receive a locking signal, wherein the control unit is configured to control the electromagnetic lock based on the locking signal.

5. The system according to any of the preceding claims, further comprises a housing, wherein the vertical guiding system is arranged in the housing and the holder is arranged outside of the housing, wherein the housing comprises a vertical slot for allowing the translational vertical movement of the translational element and the holder.

6. The system according to any of the preceding claims, wherein the vertical guiding system is configured to limit the translational vertical movement of the moveable lock between a minimal height and a maximal height measured from a ground level, wherein the minimal height is at least 50% of the maximal height.

7. The system according to any of the preceding claims, wherein the holder is configured to be rotated relative to the translational element in a rotation range having a maximum rotation angle, wherein the maximum rotation angle 180 degrees or less.

8. The system according to any of the preceding claims, further comprising a pulley-system for positioning the translational element on the vertical guiding system.

9. The system according to any of the preceding claims, further comprising a charging module configured to provide electrical power for charging the small vehicle.

10. Docking station for locking a plurality of small vehicles, wherein the docking station comprises a plurality of systems for locking a small vehicle according to one or more of the preceding claims.

11. Docking station according to the previous claim, wherein the plurality of systems are arranged such that a holder of a first system is arranged between a housing of a first system and a housing of a second system.

12. Docking station according to one of the previous claims, wherein the plurality of systems are arranged such that the rotation axes of the systems are parallel and optionally coincide when the respective translational elements are arranged at the same height on the respective vertical guiding systems.

13. System for locking a small vehicle or docking station according to any of the preceding claims, comprising
• at least one control unit for controlling at least one electromagnetic lock
• a communication module connected to the control unit,
• a cloud-based infrastructure configured to communicate with the communication module, comprising
∘ a user platform configured to communicate with a user equipment device of a use, for allowing the user to lock or unlock the electromagnetic lock
∘ a manager platform configured to communicate with a manager device of a manager party.

14. Method for locking a small vehicle, comprising a step of using a system or docking station according to any of the preceding claims.

15. Method for locking a small vehicle, comprising a step of arranging a translational element on a locking height by providing a translational vertical movement of the translational element over a vertical guiding system; a step of arranging a holder from a first position to a second position by rotating the holder relative to the translational element; a step of arranging a bar of the small vehicle in the holder while a locking element of the holder is in an unlocking position; and a step of arranging the locking element in a locking position
